# EUROPEAN PATENT SPECIFICATION

(11) **EP 1 478 679 B1**
(45) Date of publication and mention of the grant of the patent: **14.05.2008**
(21) Application number: 03705523.3
(22) Date of filing: 20.02.2003
(51) Int. Cl.: C08G 69/00, C08G 69/02, C08G 69/40, C08G 65/48, C08G 65/38, C08G 18/60, C08G 18/48, C08L 71/12

(54) **COPOLYMER CONTAINING ONE OR MORE AMIDE SEGMENTS**
COPOLYMER ENTHALTEND EIN ODER MEHRERE AMID-SEGMENTE
COPOLYMERE CONTENANT UN OU PLUSIEURS SEGMENTS AMIDES

(30) Priority: 21.02.2002 EP 02075699; 13.09.2002 EP 02078787
(43) Date of publication of application: 24.11.2004
(73) Proprietor: Stichting Dutch Polymer Institute, 5612 AZ Eindhoven (NL)
(72) Inventor: GAYMANS, Reinoud, Jaap, NL-7548 PX Enschede (NL); KRIJGSMAN, Josien, NL-7423 DW Deventer (NL)
(74) Representative: Winckels, Johannes Hubertus F.
(86) International application number: PCT/NL2003/000129
(87) International publication number: WO 2003/070806

(56) References cited:
- WO-A-91/13930
- US-A- 4 410 684
- US-A- 4 980 424
- US-A- 5 859 175

## Description

The invention relates to a co-polymer containing one or more amide segments, which has a glass transition temperature above 120°C.

The importance of polymer materials as construction materials is continually growing. In order to be suitable for such use, the dimensional stability at elevated temperature should be sufficiently high. Amorphous polymers usually have a high dimensional stability up to their glass transition temperature (Tg). Thus in order to allow the use of polymers in situations where high dimensional stability up to high temperatures is needed, the material should have a high Tg. For example polycarbonates (PC) and poly(phenylene ether) (PPE) are known that have a high dimensional stability up to their Tg, that may be as high as respectively about 150° and about 215°C.

A major disadvantage of amorphous polymers is their low solvent resistance. This is in particular important in automotive applications. Alternatively semi-crystalline polymers may be used, which have a good solvent resistance, however their Tg's are generally not so high. Most semi-crystalline materials follow 'the 2/3 rule' for Tg/Tm ratio, which rule indicates that the ratio between Tg and Tm (in K) is about 2/3. For example, with a maximum practical melting temperature (Tm) of 300 °C, the Tg would be only 110°C. A high Tg (> 110°C) means automatically a very high Tm with the possibility of thermal degradation during melt processing. So a polymer system with a high Tg and a not too high Tm (and thus with a higher Tg/Tm ratio) is highly interesting. Some (co)polymers have a high Tg/Tm ratio, however, these (co)polymers generally have a poor crystalline order. Such polymers crystallise slowly and only to a low extent. Also the melt viscosity at the crystallisation temperature is higher, as with a high Tg/Tm ratio the crystallisation temperature is now more close to the Tg. Therefore the crystallisation rate is reduced [D.W. v Krevelen, Properties of Polymers, Elsevier, Amsterdam 1990, p595]. On melt processing, a slow crystallising polymer will result in material with a very low crystallinity and a poor solvent resistance. It would be very interesting to have polymer systems that have a high Tg, a high Tg/Tm ratio and a fast crystallisation on cooling from the melt.

The high Tg polymers like Poly(phenylene ether) (PPE), Poly(phenylene sulphide) (PPS), Polyarylates (PAR) and Polycarbonates (PC) do not crystallise from the melt during melt processing. A way to obtain a material with a high Tg and a good solvent resistance is to blend these materials with a semi-crystalline polymer. For example PC is often blended with poly(butylene terephthalate) and PPE with Polyamide 6.6. However by doing so the morphology becomes complex and the modulus below the Tg of the amorphous polymer will become lower. The presence of the semi-crystalline polymer phase gives rise to a second lower Tg (Tg2) and a melting temperature. The dimensional stability of such a blend is high only up to the lowest Tg. Another disadvantage of such a blend material is that a high semi-crystalline polymer content (about 40%) is needed in order to obtain enough crystallinity and the right morphology for a good solvent resistance.

Another strategy is a blend of a semi-crystalline material and an amorphous high Tg material that are miscible. The Tg of the mixed amorphous phase will then be in between of the Tg's of the two polymers that form the mixed phase. The Tg of the mixed phase will change proportional to the amount of both polymers. These blends will have one Tg and one Tm and have high dimensional stability up to the Tg of the mixed amorphous phase.

An example of such a combination is a blend of syndiotactic polystyrene (sPS) and PPE. In a recent publication [S. Duff et al, Polymer 42, 991, 2001] this blend is described. Pure sPS is able to crystallise, with a maximum crystalline content of 60% and a melting temperature of 270°C and has a Tg of 100°C and a Tg/Tm ratio of 0.68. By blending sPS and PPE the Tg of the amorphous phase (sPS/PPE) increases with increasing PPE content. However, at the same time the crystallinity decreases with increasing PPE content and crystallisation during melt processing is difficult at higher PPE levels. So for most applications this blend does not result in a polymer system which has a sufficiently high Tg and a good solvent resistance.

Another disadvantage of the polymer systems described above containing a crystallised phase, is that they are not transparent.

Copolymers that have been found to crystallise fast are aliphatic polyetherester-di-amide segmented copolymers [R.J. Gaymans and J.L. de Haan; Polymer, 34, 4360, 1993 and M.C.E.J. Niesten, J. Feijen and R.J. Gaymans, Polymer, 41, 2000, 8487]. These copolymers with di-amides derived from aliphatic diamines and aromatic diacids have a good solvent resistance. However, at a di-amide content of 11-28 wt% they have a low Tg (-70°to 65°C) and a melting temperature in the range of 84° to 153°C. Segmented copolymers of aliphatic polyethers and wholly aromatic di-amides have at a content of 9-29 wt% a low Tg (-70° to -58°C) and a melting temperature of 170°-247°C. These materials lack a good dimensional stability.

It is an object of the invention to provide a novel high Tg polymer with a Tg of at least 120 °C, that crystallizes fast from the melt and that may serve as an alternative to known polymers e.g. for use as or in construction materials in high temperature applications.

It has been found that a specific polymer comprising one or more specific amide segments and one or more stiff chain segments fulfils this object.

Accordingly, the present invention relates to a copolymer, represented by formula I

-(-Y-Amide-(R-Amide-)ₙ-)ₘ- (I)

wherein each Amide represents an -N(H)C(O)- or -C(O)N(H)-group
wherein each R is independently chosen from the group consisting of alkylene moieties, alicyclic moieties and arylene moieties,
wherein n has a number average value of at least 3, more preferably of between 3 and 6,
wherein 30%-100 %, preferably 50%-100% and more preferably 70%-100%, of the Amide-(R-Amide-)ₙ segments are uniform in length,
wherein each Y represents a stiff chain segment comprising a moiety selected from the group consisting of aromatic polyethers, aromatic polysulphides, aromatic polysulphones, aromatic copolyesterethers, aromatic polycarbonates, aromatic polyphenylenes, aromatic polyxylylenes, and aromatic polysiloxanes and copolymers thereof,
wherein m is at least 1, preferably at least 2, more preferably at least 3, even more preferably between 3 and 40, e.g. between 3 and 6,
wherein the glass transition temperature of the copolymer is above 120 °C, preferably above 130°C, more preferably above 140°C,
wherein the Tm-Tc value is less than 40 °C, preferably less than 35 °C, more preferably less than 30 °C and
wherein the Tg/Tm ratio (wherein Tg and Tm represents a temperature in K) is at least 0.72, preferably at least 0.75.

The end groups (not shown in formula I) of a copolymer according to the invention can have any structure suitable for an end group of a polymer, e.g. each end group can independently be chosen from the group consisting of protons, hydroxy groups, amines, acids, ester groups, groups as defined for Y, and other polymer groups.

Unless indicated otherwise, the term amide segment is used to describe the segment Amide-(R-Amide-)ₙ.

The term uniformity as used herein is indicating the fraction of the most abundant Amide-(R-Amide-)ₙ segment - determined by number of segments having the same value for "n", i.e. having the same number of amide groups in the copolymer defined by formula I. E.g. if segments with n equals a certain value "y" are most abundant and these segments are present in a certain fraction of "x %", x % of the Amide-(R-Amide-)ₙ segments are uniform in length, or in other words the uniformity is x %. In particular, the uniformity meant herein is the uniformity value as determined by ¹H-NMR (see Example 1).

Obviously, an Amide-(R-Amide-)ₙ segment uniformity can alternatively be determined by methods like ¹³C-NMR, Diffusion-ordered 2D NMR, HPLC analysis, MALDI-TOF mass spectrometry analysis and GLC-Mass spectroscopy.

The stiff chain segment Y is a segment that gives a high Tg (>120°C) to the copolymer.

The stiff chain segments may mainly consist of aromatic polyethers, aromatic polysulphides, aromatic polysulphones, aromatic copolyesterethers, aromatic polycarbonates, aromatic polyphenylenes, aromatic polyxylylenes, aromatic polysiloxanes and copolymers thereof. The stiff chain segment Y may be coupled to the amide segments by one or more out of several types of units, like ester, polyester, carbonate, polycarbonate, epoxy, epoxy polymer, imide, polyimide, etc..

A preferred aromatic polyether is a poly(phenylene ether) of the group of aromatic polyethers as mentioned in US4,521,584 to Heitz et al.,, US 4,677,185 to Heitz et al., or US 5,880,221 to Liska et al, and in particular poly(2,6-dimethyl-1,4-phenylene ether). A preferred aromatic polycarbonate is of the group of aromatic polycarbonates as is mentioned in Quinn, US 4,238, 596 or Sakashita et al. US 5.026,817 and in particular a polycarbonate based on bisphenol A. Y may consist of one or more stiff chain segments that are extended, preferably with an ester, polyester, carbonate, polycarbonate, epoxy, polyepoxy, imide, polyimide group. The Tg as used herein is defined as the temperature at which the loss modulus G" has a maximum as measured by Dynamic Mechanical Analysis (DMA), at a scan rate of 1 °C/min, according to DIN 53445 with the exception that 2 mm thick samples are used. Unless indicated otherwise, when referring to Tg of a polymer or of a composition having more Tg's, the Tg is meant at which the transition has the highest loss modulus (G") value, as measured by the above indicated Dynamic Mechanical Analysis (DMA) method.

By DMA (using the above indicated modified method according to DIN 53445) also the temperature at which the polymer starts to flow (Tfl) is measured (i.e. the temperature at which the polymer reaches a shear modulus of 0.5 MPa). The Tfl is usually 1-20 °C lower than the Tm and this due to the lower scan rate.

The Tm as used herein is defined as the melting temperature as measurable by Differential Scanning Calometry (DSC) at a scan rate of 20°C/min. For polymers the Tm is determined in the second heating scan which is taken after first warming the sample to 20 °C above the melting temperature, cooling with 20 °C/min down to 50 °C and reheating at 20 °C/min. The peak maximum is taken as the melting temperature (Tm).

The rate of crystallisation (Tm-Tc) can be quantified with the DSC method by measuring the difference of the melting temperature (Tm) and the crystallisation temperature (Tc). The Tm is determined with a heating rate of 20°C/min at the peak maximum of the melting endotherm in the second heating scan and the Tc in the first cooling scan with 20°C/min at the peak maximum of the crystallization exotherm, after the first heating scan to 20°C above the melting temperature. It is surprisingly found that a copolymer according to the invention has a Tm-Tc value of less than 40°C, which is remarkably low, in particular for a polymer with a high Tg/Tm ratio. By comparison, it has been reported in US 6,011,125 that a fast crystallising polymer like poly(butylene terephthalate) has a Tm-Tc value of 41 °C and a slow crystallising polymer like poly(ethylene terephthalate) has a Tm-Tc value of 76°C [US 6,011,125].

Accordingly the present invention also relates to a copolymer having a Tm-Tc value of less than 40 °C, preferably less than 35 °C, more preferably less than 30 °C. The lower this value, the faster the crystallization is. This is very important for fast processing of the materials.

A copolymer according to the present invention has been found to have very good dimensional stability at least up to the Tg of the copolymer. The modulus (e.g. the G modulus) of a copolymer according to the invention is high up to the Tg and may demonstrate a very desirable "rubber plateau" at temperatures well beyond Tg.

A copolymer according to the invention shows good melt flow behaviour and very favourable solvent resistance, in particular against solvents such as hydrocarbons, chlorinated hydrocarbons, petrol, alcohols, ethers, esters, ketones and the like.

A copolymer according to the invention shows a good resistance against detrimental influences of inorganic salts, which is for example advantageous when such a copolymer is used in an automotive application, because of the possible exposure to salt that has been used to grit roads.

A copolymer according to the present invention has been found to be transparent. This is very unusual for a semi-crystalline material and a great advantage in many applications.

A copolymer according to the invention is well processable, e.g. by extrusion, injection moulding, blow moulding, fibre spinning.

A copolymer according to the invention has a good solvent resistance. The solvent resistance may improve when the amide percentage increases. Copolymers with 3-10 wt% amide segments (Amide-(R-Amide-)ₙ) have been found to have a very good solvent resistance. Copolymers with over 10 wt% amide segments have been found to have an excellent solvent resistance.

A copolymer according to the invention has properties which may be interesting for e.g. automotive applications, electronics industry (print plates), sport goods, and fibre applications. The copolymer may also be used as a compatibiliser in blends, such as a blend of poly(phenylene ether)-polyamide (e.g. Noryl-GTX® from General Electric Plastics) and poly(phenylene ether)-polyester.

Very good results have been achieved with a segmented copolymer according to the invention, i.e. a copolymer of which m is more than 1. It has surprisingly been found that, despite of the relative low melting temperature of such a copolymer according to the invention and given the reasonably high viscosity of such a copolymer above Tg, it is still possible to crystallise the amide segments in the copolymer very fast, even at a low content of amide segments, in that way achieving a dimensionally stable crystalline phase.

In a preferred embodiment, at least the majority of the amide segments is formed of tri-amide segments (n=2) and/or tetra-amide segments (n=3).

Very good results have been achieved with a copolymer according to the invention, wherein the copolymer has a Tg/Tm (Tg and Tm both in K) ratio and/or a Tg/Tfl (Tg and Tf1 both in K) ratio of at least 0.72, preferably of at least at least 0.75, more preferably of more than 0.77.

Very suitable copolymers according to the invention are copolymers wherein the amide segments (Amide-(R-Amide-)ₙ) are chosen from the group consisting of

-C(O)N(1-1)-R₂-N(H)C(O)-R₁-C(O)N(H)-R₂-N(H)C(O)-;

-C(O)N(H)-R₃-C(O)N(H)-R₂-N(H)C(O)-R₃-N(H)C(O)-;

-N(H)C(O)-R₁-C(O)N(H)-R₂-N(H)C(O)-R₁-C(O)N(H)-

-N(H)C(O)-R₃-N(H)C(O)-R₁-C(O)N(H)-R₃-C(O)N(H)-,

wherein each R₁, R₂ and R₃ is independently chosen from the group consisting of alkylene, alicyclic and arylene moieties.

Preferably, at least the majority of R₁, R₂ and/or R₃ are independently chosen from the group consisting of C₁-C₂₀ alkylene, C₆-C₂₀ alicyclic moieties and C₆-C₂₀ arylene moieties. Much preferred moieties are C₂-C₈ alkylene, C₆-C₁₂ alicyclic and C₆-C₁₂ arylene.

In a preferred embodiment, at least the majority of the R₁'s are independently chosen from the group consisting of adipic acid residues, terephthalic acid residues, isophthalic acid residues and naphthalic acid residues.

Very suitable is a copolymer wherein at least the majority of the alkylene moieties are linear alkylene moieties, e.g. linear C₁-C₂₀ alkylene, preferably linear C₂-C₈ alkylene.

The Y segments may be prepared first or can be prepared during the copolymerisation. The segments might be coupled to the amide segments by several types of units, like- ester, polyester, carbonate, polycarbonate, epoxy, epoxy polymer, imide and polyimide. These Y segments with functional groups may be prepared first or can be formed during the polymerisation process. It is also possible to start the polymerisation with a high molecular weight polymer Y and a diamide and built in the amide segment by an interchange reaction. Very good results have been achieved with a copolymer wherein at least the majority of the segments Y have a molecular weight of 200 to 40,000 g/mol. In a much preferred embodiment at least the majority of the segments Y have a molecular weight in the range of 600 to 20,000, more preferably 600-12,000 g/mol.

The molecular weight of a copolymer according to the invention may - depending upon its intended use - be chosen within a wide range. For example the number average molecular weight (Mn) of the copolymer may be in the range of 1,000 g/mol to 100,000 g/mol. Preferably, Mn is approximately 2,000 g/mol to 50,000 g/mol. The molecular weight as defined herein is based upon gel permeation chromatographic methodology, using polystyrene as a reference.

A copolymer according to the invention may in principle be prepared in any way. For example the Amide-(R-Amide-)ₙ segments may be prepared in a condensation reaction, e.g. by reacting diacids with diamines, by reacting polyaminoacids, or by reacting aminoacids with either a diacid or diamine. In this way amide segments are formed with more than one amide group wherein n is typically 2 to 6. Copolymers are prepared by reacting an amide segment containing starting material and a Y segment with reactive groups. In a preferred embodiment a starting material is prepared with the Amide-(R-Amide-)ₙ segment is prepared first, and then a copolymer is formed with a compound providing segment Y. This gives the possibility to obtain a copolymer with a high uniformity of the length of the amide segments. For example a tetra-amide segment (n=3) with ester end groups can be reacted with an Y segment containing hydroxyl end groups.

The reaction between amide segment containing starting material and Y segment with reactive groups may be carried out in the presence of a suitable catalyst, such as those that are commonly used for coupling an amide segment starting material with a particular Y-segment, e.g. catalyst used for the polyester, polyarylate and polycarbonate synthesis like a Ti(i-O-alkyl), zinc acetate, calcium acetate, antimone oxide, lanthane acetylacetonate [see e.g. Comprehensive Polymer Science, G. Allan et al. Pergamon press Oxford, 1989, Chapters 17, 18, 20, ]

The polymerisation may be carried out at constant temperature. It is also possible to alter the temperature during the polymerisation e.g. to increase the temperature stepwise in order not to lose volatile starting materials before they have reacted. In a melt polymerisation the temperature is typically at least 10 °C preferably at least 20 °C above the melting temperature of the polymer. To further enhance the molecular weight a post condensation in the solid state may be employed.

In another preferred embodiment, the amide segment is formed during the polymerisation by using a starting material that has an amide length that is shorter than the final length. Shorter amide segments are more easily prepared and have a lower melting temperature. For example a di-amide with amine end groups can be reacted with a compound Y having (or yielding) ester end groups. In the course of the reaction tetra-amide segments are formed. Examples of suitable diacids, diamines, respectively amino acids are HOOC-R₁-COOH, H₂N-R₂-NH₂, respectively H₂N-R₃-COOH, wherein R₁, R₂, respectively R₃ are as identified above. It is even possible to prepare the whole amide segment during the polymerisation and thus start from diamines, amino acids diacids, diesters and the like.

A copolymer according to the invention can be prepared from PPE segments with a low molecular weight and a high functionality. This type of PPE copolymers can be obtained by synthesis from monomers [W. Risse, W. Heitz, Makromol Chem., 186, 1835, 1985)] or can be obtained by a redistribution reaction of a copolymer [H.A.M. van Aert, R.W. Venderbosch, M. van Genderen, P.J. Lemstra, E.W. Meijer, J. Macromol. Sci., Pure Appl. Chem., A32, 515, 1995].

A copolymer according to the invention may be employed as such or in a composition further comprising one or more fillers, fibres, colorants, toughening agents, antioxidants and/or other additives typically employed in polymer materials.

The copolymer might also contain and/or can be blended with an unmodified polymer, such as a polymer essentially consisting of one or more groups as defined for the stiff chain segments Y.

A copolymer according to the invention may also very suitably be employed in a blend with one or more other polymers, such as with polyamides, polyesters, and rubber compounds or combinations thereof.

The invention further relates to a composite comprising a copolymer according to the invention, optionally together with another polymer in the form of a blend. Preferably a composite according to the invention comprises a copolymer according to the invention of which at least the majority of the amide segments are tri-amides and/or tetra-amides (i.e. wherein n=2, respectively n=3).

Particular suitable are composites comprising a copolymer according to the invention with reinforcing fillers like mica, kaolin, calcium carbonate, glass fibre, aramide fibre, carbon fibre and the like.

The invention will now further be illustrated by the following Examples.

### EXAMPLE 1

Segmented copolymers with a tetra-amide bis methyl ester - di(hexamethylene terephthalamide) (T6T6T-dimethyl) and a poly(2,6-dimethyl-1,4-phenylene ether) (PPE) segment were made in a polycondensation reaction.

The T6T6T-dimethyl segment was made as follows in two steps. First, the di-(6-aminohexyl)terephthalamide 6T6-diamine was made in a melt reaction from dimethyl terephthalate and an excess of 1,6-diaminohexane. In a next step 6T6-diamine was reacted with an excess of methyl phenyl terephthalate (MPT) to obtain the product T6T6T-dimethyl. For the polymerisation PPE segments with terephthalic methyl ester end groups (Z-PPE-Z) were used (as described in European Pat Appl. Euro 01201559.0) The PPE segments were made out of PPO-803®, obtained from GE Plastics. PPO-803® has an Mn of 11.000 g/mol and has 75 µmol OH/g. This corresponds to an OH end group functionality of 0.8. The inherent viscosity of the polymers was determined at a concentration of 0.1 g/dl in a 1:1 (molar ratio) mixture of phenol/1,1,2,2-tetrachloroethane at 25°C, using a capillary Ubbelohde (ASTM D446). 1B. ¹H NMR spectra were recorded on a Bruker AC 250 spectrometer at 300 MHz using trifluoro acetic acid (TFA) as a solvent. The phenolic OH concentration was determined by titration. Samples for the dynamical mechanical analysis (DMA) test (70x9x2 mm) were prepared on an Arburg H manual injection moulding machine. Before use, the samples were dried in a vacuum oven at 70°C overnight. Using a Myrenne ATM3 torsion pendulum at a frequency of approximately 1 Hz the values of the storage modulus G' and the loss modulus G" as a function of the temperature were measured. As the glass transition temperature (Tg) the temperature was taken where the loss modulus G" has a maximum. The flow temperature (Tfl) was defined as the temperature where the storage modulus G' reached 0.5 MPa. The flow temperature is in general 1-20°C below the melting temperature (Tm) as determined by DSC. The storage modulus of the rubber plateau is determined at Tg + 40°C.

The Amide content is calculated on the basis of the -Amide-(R-Amide)ₙ- content in the -(-Y-Amide-(R-Amide)ₙ-)ₘ-.

Di-(6-aminohexyl)terephthalamide (DAHT or 6T6-diamine) was made in a 1L stirred round bottom flask with nitrogen inlet and a reflux condenser loaded with 38.8 g dimethyl terephthalate (DMT) (0.20 mol) and 139 g 1,6-diaminohexane (1.2 mol). The mixture was heated to 120°C and kept at that temperature for 2 hours. At 80°C a clear solution was formed and methanol started boiling off. When the temperature of 120°C was reached, precipitation had caused solidification of the reaction mixture. After 2 hours 500 ml m-xylene was added and the mixture was stirred for 15 minutes. The suspension was filtered with a hot glass filter and washed with boiling toluene. The product was washed with toluene. The yield was 91%. The uniformity of the product was 70% (determined by ¹H-NMR from the methylene protons at the amide side at 3.69 ppm and methylene protons at amine side at 3.31 ppm. The ratio [methylene amide side at 3.69 /methylene amine side at 3.31] (R_{3.69/3.31}) was 1.0 for 6T6 and 2.0 for 6T6T6. The uniformity was approximated by [2-(R_{3.69/3.31}) x 100%]. The melting temperature was 170°C.

T6T6T-dimethyl was made in a 1L stirred round bottom flask with nitrogen inlet and a reflux condenser loaded with 7.24 g 6T6-diamine (0.02 mol), 20.5 g methyl phenyl terephthalate (MPT) (0.08 mol) and 400 ml n-methyl pyrolidone (NMP). The mixture was warmed to 120°C and kept at that temperature for 16 hours. After cooling, the precipitated product was filtered with a glass filter and washed with NMP, toluene and acetone. The yield was 70%. The uniformity was 80% (determined by ¹H-NMR from the integral of the terephthalic protons on the amide side at 7.93-7.98 ppm and the protons on the terephthalic ester side at 8.28 ppm). The ratio [terephthalic protons on the amide side / terephthalic ester side] (R_{7.93-7.98/8.28}) was 2.0 for T6T6T and 3.0 for T6T6T6T. The uniformity of TGTGT was approximated by [3 - (R_{7.93-7.98/8.28}) x100%]. The melting temperature as measured by DSC was 293°C.

Z-PPE-Z was synthesized from PPO-803® by redistribution with tetra-methyl bisphenol A, followed by end group modification with methyl chlorocarbonyl benzoate (MCCB). 40 Gram PPO-803® is dissolved in 400 ml toluene at 60°C. Subsequently 4 gram (14 mmol) of tetramethyl bisphenol A (TMBPA) was added. The reaction was started by the addition of 0.40 gram (1.7 mmol) tetramethyl diphenoquinone (TMDPQ). After 2 hours reaction time, the temperature was raised to 70°C and 1.5 excess to the total OH concentration (of PPE, TMBPA and TMDPQ) of MCCB (50 mmol, 10 g) was added. After 30 minutes a 1.5 excess (to MCCB) tri-ethylamine was added slowly. After 3 hours the reaction mixture was precipitated in a 10-fold excess of methanol. The precipitated polymer was collected by filtration, washed with methanol and dried in a vacuum oven at 50°C. The yield was ~95%. The product is called Z-PPE-Z and has a molecular weight of 2950 g/mol and around 575 µmol OCH₃/gram. Z-PPE-Z of other molecular weight and functionalities was used as well.

From Z-PPE-Z, dodecanediol (C12) and T6T6T-dimethyl, a polymer was prepared. The polymerisation reaction was carried out in a 50 ml glass reactor with a nitrogen inlet and mechanical stirrer. The reactor, containing 10 gram Z-PPE-Z (5.75 mmol OCH₃), dodecanediol (1.16 g, 5.75 mmol), T6T6T-dimethyl (1.97 g, 2.88 mmol), 20 ml NMP and catalyst solution (0.58 ml of 0.05 M Ti(i-OC₃H₇)₄ in m-xylene), was heated in an oil bath under a stream of dry nitrogen to 180°C. Then the temperature was increased in steps: 30 minutes at 180°C, 30 minutes at 220°C, 60 minutes at 250°C and 60 minutes at 280°C. Subsequently the pressure was carefully reduced (from atmospheric pressure to P<20 mbar) to distil off the remaining NMP during 30 minutes and then further reduced (to P<1 mbar) for 60 minutes. A low pressure helps to evaporate the condensation products and thereby increase the molecular weight. The reaction mixture was a clear liquid. Finally, the vessel was allowed to slowly cool to room temperature whilst maintaining the low pressure. When cooled, the polymer mass was taken out of the reactor and crushed to small particles. The product had an inherent viscosity of 0.39 dl/g.

Copolymers with different amounts of T6T6T were made by changing the amount of T6T6T-dimethyl and dodecanediol (C12). The products have inherent viscosities of 0.3-0.6 dl/g. The properties of the copolymers are given in Table 1.

### EXAMPLE 2

The procedure of Example 1 was repeated using different diols: ethylene glycol (C2), 1,6-hexanediol (C6), C36-diol (a C36 dimerized fatty acid diol as supplied by Uniquema, in Gouda, The Netherlands) and poly(tetramethylene oxide) (PTMO) of 1000 g/mol (P1000) The properties of these copolymers are given in Table 1.

### Comparative example A

Copolymers of Z-PPE-Z and different diols (1,12-dodecanediol, , C36-diol (a C36 dimerised fatty acid diol as supplied by Uniquema, in Gouda, The Netherlands) and poly(tetramethylene oxide) (PTMO) of different chain lengths (1000 and 2000 g/mol), (P1000 and P2000) without T6T6T-dimethyl were prepared according to the procedure of Example 1. The properties of these polymers are given in Table 1. (identified as CE1-4)

### EXAMPLE 3

Bis methyl ester-di(tetramethylene terephthalamide) (T4T4T-dimethyl) was used instead of T6T6T-dimethyl as in Examples 1-2. Polymers with T4T4T have a higher melting temperature. The properties of the resulting polymers are given in Table 1.

T4T4T-dimethyl was made according to the procedure for T6T6T-dimethyl (Example 1). Di-(4-aminobutyl)terephthalamide (4T4-diamine) was made in a melt reaction from dimethyl terephthalate and 1,4-diaminobutane. T4T4T-dimethyl was made from 4T4-diamine and MPT.

4T4-diamine was made in a 1 L stirred round bottom flask with nitrogen inlet and a reflux condenser loaded with 38.8 g DMT (0.20 mol) and 106 g 1,4-diaminobutane (1.2 mol). The mixture was heated to 100°C and kept at that temperature for 2 hours. At 80°C a clear solution was formed and methanol started boiling off. After 3 hours 500 ml m-xylene was added and the mixture was stirred for 15 minutes. The suspension was filtered with a hot glass filter and washed with boiling toluene. The product was washed with toluene. The yield was 93% and the uniformity 70%.

T4T4T-dimethyl was made in a 1L stirred round bottom flask with nitrogen inlet and a reflux condenser loaded with 6.12 g 4T4-diamine (0.02 mol), 20.5 g MPT (0.08 mol) and 400 ml NMP. The mixture was warmed to 120°C and kept at that temperature for 16 hours. After cooling, the precipitated product was filtered with a glass filter and washed with NMP, toluene and acetone. The yield was 85% and the uniformity 80%. The melting temperature as measured by DSC was 340°C.

### EXAMPLE 4

The procedure for polymerisation of Example 1 was repeated using T6T6T-dimethyl with a uniformity of >95% (Table 1).

The uniformity of T6T6T-dimethyl can be improved by using 6T6-diamine with a higher uniformity. The uniformity of the 6T6-diamine was improved to >95% by recrystallisation from n-butylacetate (15 g/litre, 110°C). The melting temperature after recrystallisation was 180°C. T6T6T-dimethyl synthesized from this 6T6-diamine had a uniformity of>95% and a Tm as measured by DSC of 303°C. The polymerisation with this T6T6T and PPE segments was as in example 1. The so obtained polymer had an inherent viscosity of 0.5, Tg of 185°C, Tf1 of 269°C, Tm of 272°C, Tc of 250°C and thus a Tg/Tm of 0.84, a Tg/Tf1 of 0.85 and a Tm-Tc of 21°C. The Tg/Tm is high and the Tg/Tf1 has about the same value . The Tm-Tc has a very low value (21 °C) that is much lower than the Tm-Tc value of known fast crystallising homopolymers.

### EXAMPLE 5

Z-PPE-Z with a monomodal weight distribution was prepared. The method for synthesis of Z-PPE-Z of Example 1 was followed. After the reaction, 175 ml of methanol was added to precipitate the high molecular weight fraction selectively. After filtration the monomodal low molecular weight fraction was obtained by precipitation of the filtrate in a 10-fold excess of methanol. The polymerisation procedure of Example 1 was repeated using monomodal Z-PPE-Z (Table 1).

### EXAMPLE 6

A segmented polymer based on PPE-2OH and bis phenyl ester - di(hexamethylene terephthalamide) T6T6T-diphenyl was prepared.

40 Gram PPE was dissolved in 400 ml toluene at 60°C. Subsequently 4 gram (14 mmol) of tetramethyl bisphenol A (TMBPA) is added. The reaction was started by the addition of 0.40 g tetramethyl diphenoquinone (TMDPQ) (1.7 mmol). After 3 hours the reaction mixture was precipitated in a 10-fold excess of methanol. The precipitated polymer was collected by filtration, washed with methanol and dried in a vacuum oven at 50°C. The yield was 94%. The product, called PPE-20H, had 450 µmol OH/g and a molecular weight of -3500 g/mol.

Bis phenyl ester-di(hexamethylene terephthalamide) T6T6T-diphenyl was made in a 1L stirred round bottom flask with nitrogen inlet and a reflux condenser loaded with 7.24 g 6T6-diamine (0.02 mol)(Example 4), 38 g diphenyl terephthalate (DPT) (0.12 mol) and 400 ml NMP. The mixture was warmed to 120°C and kept at that temperature for 16 hours. After cooling, the precipitated product was filtered with a glass filter and washed with NMP, toluene and acetone. The yield was 74%, the uniformity 70%. The uniformity was improved to >95% by recrystallisation from NMP (15g/400ml, dissolving at 120°C) and the melting temperature was now 316°C.

From PPE-20H and recrystallised T6T6T-diphenyl, a polymer was prepared. The polymerisation reaction was carried out in a 50 ml glass reactor with a nitrogen inlet and mechanical stirrer. The reactor, containing 10 gram PPE-20H (4.50 mmol OH), T6T6T-diphenyl (1.82 g, 2.25 mmol) and 20 ml NMP, was heated in an oil bath to 180°C. After 30 minutes reaction time, the temperature was raised to 250°C and after another 30 minutes to 280°C for one hour. The pressure was then carefully reduced (P<20 mbar) to distil off NMP during 60 minutes and then further reduced (P<1 mbar) for 60 minutes. The reaction mixture was a clear liquid. Finally, the vessel was allowed to slowly cool to room temperature whilst maintaining the low pressure. The product had an inherent viscosity of 0.33 dl/g (Table 1).

### EXAMPLE 7

Segmented polymers based on PPE-2OH, DPT and 6T6-diamine (uniformity >95%) were prepared.

The polymerisation reaction was carried out in a 50 ml glass reactor with a nitrogen inlet and mechanical stirrer. The reactor, containing 10 gram PPE-20H (4.50 mmol OH), 6T6-diamine (0.81 g, 2.25 mmol), DPT (1.43 g, 4.50 mmol) and 20 ml NMP, was heated in an oil bath to 140°C. Then the temperature was increased in steps: 2 hours at 140°C, 30 minutes at 180°C, 30 minutes at 250°C and 60 minutes at 280°C. The pressure was then carefully reduced (P<20 mbar) to distil off the remaining NMP during 30 minutes and then further reduced (P<1 mbar) for 60 minutes. The reaction mixture was a clear liquid. Finally, the vessel was allowed to slowly cool to room temperature whilst maintaining the low pressure. The product had an inherent viscosity of 0.31 dl/g (Table 1).

**Table 1: Properties of PPE/TxTxT/diol polymers.**

| Ex. | type TxTxT | diol | Z-PPE- Z [g/mol] | TxTxT [w%] | ηᵢₙₕ [dl/g | T_{g} [°C] | G' plateau CMPa] | T_{fl} [°C] | T_{g}/Tₙ* [-] | Solv. Res.+ |
|---|---|---|---|---|---|---|---|---|---|---|
| Ex. 1 | | | | | | | | | | |
| 1.1 | T6T6T | C12 | 3300 | 8.7 | 0.39 | 185 | 10 | 275 | 0.8 | 1 |
| 1.2 | T6T6T | C12 | 3500 | 7.3 | 0.45 | 185 | 5 | 264 | 0.85 | 1 |
| 1.3 | T6T6T | C12 | 3500 | 5.9 | 0.49 | 185 | 2 | 262 | 0.85 | 2 |
| Ex. 2 | | | | | | | | | | |
| 2.1 | T6T6T | C2 | 3500 | 8.2 | 0.32 | 185 | 1 | 265 | 0.85 | 1 |
| 2.2 | T6T6T | C6 | 3500 | 8.2 | 0.32 | 185 | 3 | 264 | 0.85 | 1 |
| 2.3 | T6T6T | C36 | 3000 | 9.0 | 0.39 | 135 | 5 | 275 | 0.74 | 1 |
| 2.4 | T6T6T | P1000 | 3300 | 6.5 | 0.54 | broad | broad | 255 | - | 2 |
| Comp. Ex A (CE) | | | | | | | | | | |
| CE1 | - | C12 | 3300 | 0 | 0.33 | 175 | np | 190 | np | 3 |
| CE2 | - | C36 | 3300 | 0 | 0.43 | 155 | np | 180 | np | 3 |
| CE3 | - | P1000 | 3300 | 0 | 0.48 | 120 | np | 160 | np | 3 |
| CE4 | - | P2000 | 3300 | 0 | 0.51 | - | np | 115 | np | 3 |
| Ex. 3 | | | | | | | | | | |
| 3.1 | T4T4T | C12 | 3300 | 8.0 | 0.31 | 180 | 4 | >300 | <0.79 | 1 |
| 3.2 | T4T4T | C36 | 2800 | 7.6 | 0.38 | 135 | 2 | >300 | <0.74 | 1 |
| 3.3 | T4T4T | P1000 | 3300 | 5.9 | 0.52 | broad | broad | 130 | - | 2 |
| Ex. 4 | | | | | | | | | | |
| 4.1 | T6T6T | C12 | 3500 | 9.4 | 0.50 | 185 | 6 | 269 | 0.8 | 1 |
| Ex. 5 | | | | | | | | | | |
| 5.1 | T6T6T | C12 | 2500 | 10.0 | 0.36 | 150 | 2.5 | 235 | 0.83 | 1 |
| Ex. 6 | | | | | | | | | | |
| 6.1 | T6T6T | no diol | 3500** | 6.6 | 0.33 | 190 | 1 | 290 | 0.82 | 1 |
| Ex. 7 | | | | | | | | | | |
| 7.1 | T6T6T | no diol | 3500** | 6.6 | 0.31 | 185 | 1.5 | 265 | 0.85 | 1 |

| | | | | | | | | | | |
|---|---|---|---|---|---|---|---|---|---|---|
| np : not present - : not determinable *: Tg/Tfl has about the same value as Tg/Tm see Example 4 **: PPE-20H was used instead of Z-PPE-Z +: Solvent resistance (24 hours in chloroform): 1, hardly attacked; 2, partly attacked; 3, completely dissolved | | | | | | | | | | |

### EXAMPLE 8

Segmented polymers based on polycarbonate and tetra-amide-diester were prepared starting from T6T6T-diphenyl (according to the procedure of Example 6). As an example a polymer based on polycarbonate and 10 wt% T6T6T is given.

The polymerisation reaction was carried out in a 50 ml glass reactor with a nitrogen inlet and mechanical stirrer. The reactor, containing bisphenol A (5.06 gram, 22.2 mmol), diphenyl carbonate (4.54 g, 21.2 mmol), T6T6T-diphenyl (0.81 g, 1 mmol) and 20 ml NMP, was heated in an oil bath to 180°C. Then the temperature was increased in steps: 30 minutes at 180°C, 30 minutes at 220°C, 30 minutes at 250°C and 60 minutes at 280°C. The pressure was then carefully reduced (P<20 mbar) to distil off the remaining NMP during 60 minutes and then further reduced (P<1 mbar) for 60 minutes. The reaction mixture was a clear liquid. Finally, the vessel was allowed to slowly cool to room temperature whilst maintaining the low pressure. The product had a Tg of 150°C, a flow temperature of 260°C and a G' at 190°C of 5 MPa.

### EXAMPLE 9

Segmented polymers based on polycarbonate and tetra-amide-diester T6T6T were prepared starting from T6T6T-diphenyl (Example 6) and a high molecular weight polycarbonate .

The polymerisation reaction was carried out in a 50 ml glass reactor with a nitrogen inlet and mechanical stirrer. The reactor, containing 10 g polycarbonate 1.29 g of T6T6T-diphenyl and 20 ml NMP, was heated in an oil bath to 180°C. Then the temperature was increased in steps: 30 minutes at 180°C, 30 minutes at 250°C and 60 minutes at 280°C. The pressure was then carefully reduced (P<20 mbar) to distil off the remaining NMP during 60 minutes and then further reduced (P<1 mbar) for 60 minutes. The reaction mixture was a clear liquid. Finally, the vessel was allowed to slowly cool to room temperature whilst maintaining the low pressure.

### EXAMPLE 10

Segmented polymers based on polyarylate and tetra-amide-diester T6T6T were prepared starting from T6T6T-diphenyl (Example 6). As an example a polymer of polyarylate (50/50 DPI/DPT-bisphenol A copolymer) and 10 wt% T6T6T is given.

The polymerisation reaction was carried out in a 50 ml glass reactor with a nitrogen inlet and mechanical stirrer. The reactor, containing bisphenol A (3.66 gram, 16.1 mmol), diphenyl terephthalate (2.39 g, 7.5 mmol), diphenyl isophthalate (2.39 g, 7.5 mmol), T6T6T-diphenyl (0.81 g, 1 mmol) and 20 ml NMP, was heated in an oil bath to 180°C. Then the temperature was increased in steps: 30 minutes at 180°C, 30 minutes at 220°C, 30 minutes at 250°C and 60 minutes at 280°C. The pressure was then carefully reduced (P<20 mbar) to distil off the remaining NMP during 60 minutes and then further reduced (P<1 mbar) for 60 minutes. The reaction mixture was a clear liquid. Finally, the vessel was allowed to slowly cool to room temperature whilst maintaining the low pressure.

## Claims

1. Copolymer, represented by formula I
-(-Y-Amide-(R-Amide-)ₙ-)ₘ- (I)
wherein each Amide represents an -N(H)C(O)- or -C(O)N(H)- group
wherein each R is independently chosen from the group consisting of alkylene moieties, alicyclic moieties and arylene moieties,
wherein n has a number average value of at least 3,
wherein m is at least 1,
wherein at least 30% of the Amide-(R-Amide-)ₙ segments are uniform in length,
wherein each Y represents a stiff-chain segment comprising a moiety selected from the group consisting of aromatic polyethers, aromatic polysulphides, aromatic polysulphones, aromatic copolyesterethers, aromatic polycarbonates, aromatic polyphenylenes, aromatic polyxylylenes, and aromatic polysiloxanes and copolymers thereof,
wherein the glass transition temperature of the copolymer is above 120°C,
wherein the Tm-Tc value is less than 40°C.
wherein the Tg/Tm ratio (wherein Tg and Tm represents a temperature in K) is at least 0.72.

2. Copolymer according claim 1 wherein at least 50 %, preferably at least 70%, of the Amide-(R-Amide-)ₙ segments are uniform in length.

3. Copolymer according to any of the preceding claims, wherein the amide segments ((Amide-(R-Amide-)ₙ) are chosen from the group consisting of
-C(O)N(H)-R₂-N(H)C(O)-R₁-C(O)N(H)-R₂-N(H)C(O)-,
-C(O)N(H)-R₃-C(O)N(H)-R₂-N(H)C(O)-R₃-N(H)C(O)-,
-N(H)C(O)-R₁-C(O)N(H)-R₂-N(H)C(O)-R₁-C(O)N(H)-
and
-N(H)C(O)-R₃-N(H)C(O)-R₁-C(O)N(H)-R₃-C(O)N(H)-,
wherein each R₁, R₂ and R₃ is independently chosen from the group consisting of alkylene and arylene moieties.

4. Copolymer according to claim 3, wherein each R₁, R₂ and/or R₃ are independently chosen from the group consisting of C₁-C₂₀ alkylene moieties, C₆-C₂₀ alicyclic moieties and C₆-C₂₀ arylene moieties.

5. Copolymer according to claim 4, wherein each R₁, R₂, and/or R₃ is selected from the group consisting of C₂-C₈ alkylene, C₆-C₁₂ alicyclic and C₆-C₁₂ arylene.

6. Copolymer according to claim 4 or 5, wherein each R₁ is independently chosen from the group consisting of adipic acid residues, terephthalic acid residues, isophthalic acid residues and naphthalic acid residues.

7. Copolymer according to claim 5, wherein each R₂, is independently chosen from the group consisting of C₂-C₈ alkylene moieties.

8. Copolymer according to any of the preceding claims, wherein Y has a molecular weight of 200 to 40,000 g/mol, preferably of 600 to 20,000 g/mol, more preferably 5,000 to 20,000 g/mol.

9. Copolymer according to any of the preceding claims, wherein Y consists of one or more stiff chain segments that are extended with an ester, polyester, carbonate, polycarbonate, epoxy, polyepoxy, imide and/or polyimide group.

10. Copolymer according to any of the preceding claims, wherein m is at least 2, preferably at least 3, more preferably between 3 and 6.

11. Copolymer according to any of the preceding claims, wherein the copolymer has Tg/Tm ratio (wherein Tg and Tm represents a temperature in K) of at least 0.75, preferably of at least 0.77.

12. Copolymer according to any of the preceding claims, wherein the copolymer is a transparent material.

13. Copolymer according to any of the preceding claims, wherein the copolymer has a Tm-Tc value of less than 35 °C, preferably of less than 30°C.

14. Blend comprising a copolymer according to any of the preceding claims and one or more other polymers, preferably one or more other polymers selected from the group consisting of polyamides, polyesters and rubbers.

15. Composite comprising a copolymer according to any of the claims 1-13 or a blend according to claim 14 and at least one type of reinforcing fillers, preferably comprising at least one type of reinforcing fillers selected from the group consisting of mica, kaolin, calcium carbonate, glass fibre, aramide fibre and carbon fibre.

16. Process for preparing a copolymer according to any of the claims 1-13, wherein the amide segments are prepared from dicarboxylic acid moieties, diamine moieties and/or amino acid moieties by melt polymerisation.

17. Process for preparing a copolymer according to any of the claims 1-13, wherein a starting material is used that contains at least one compound selected from the group consisting of tetra-amidediesters, diamine-diamides and diamines

18. Process for preparing a copolymer according to any of the claims 1-13, wherein the starting material contains an amine functionalised Y segment.

## Patentansprüche

1. Copolymer mit der Formel I
-(-Y-Amid-(R-Amid-)ₙ-)ₘ- (I)
in der jedes Amid für eine -N(H)C(O)- oder -C(O)N(H)-Gruppe steht,
in der jedes R unabhängig ausgewählt ist aus der Gruppe bestehend aus Alkylenanteilen, alicyclischen Anteilen und Arylenanteilen,
in der n einen durchschnittlichen Zahlenwert von mindestens 3 hat,
in der m mindestens 1 ist,
in der mindestens 30 % der Amid- (R-Amid-)ₙ-Segmente eine einheitliche Länge haben,
in der jedes Y für ein steifkettiges Segment steht, das einen Anteil ausgewählt aus der Gruppe bestehend aus aromatischen Polyethern, aromatischen Polysulfiden, aromatischen Polysulfonen, aromatischen Copolyesterethern, aromatischen Polycarbonaten, aromatischen Polyphenylenen, aromatischen Polyxylylenen und aromatischen Polysiloxanen und Copolymeren davon umfasst,
wobei die Glasübergangstemperatur des Copolymers über 120°C liegt,
wobei der Tₘ-T_{c}-Wert kleiner als 40°C ist,
wobei das T_{g}/Tₘ-Verhältnis (wobei T_{g} und Tₘ für eine Temperatur in K stehen) mindestens 0,72 beträgt.

2. Copolymer nach Anspruch 1, bei dem mindestens 50 %, vorzugsweise mindestens 70 % der Amid-(R-Amid-)ₙ -Segmente eine einheitliche Länge haben.

3. Copolymer nach einem der vorhergehenden Ansprüche, bei dem die Amidsegmente ((Amid-(R-Amid-)ₙ) ausgewählt sind aus der Gruppe bestehend aus:
-C(O)N(H)-R₂-N(H)C(O)-R₁-C(O)N(H)-R₂-N(H)C(O)-,
-C(O)N(H)-R₃-C(O)N(H)-R₂-N(H)C(O)-R₃-N(H)C(O)-,
-N(H)C(O)-R₁-C(O)N(H)-R₂-N(H)C(O)-R₁-C(O)N(H)-
und
-N(H)C(O)-R₃-N(H)C(O)-R₁-C(O)N(H)-R₃-C(O)N(H)-,
wobei jedes R₁, R₂ und R₃ unabhängig ausgewählt ist aus der Gruppe bestehend aus Alkylen- und Arylenanteilen.

4. Copolymer nach Anspruch 3, bei dem jedes R₁, R₂ und/oder R₃ unabhängig ausgewählt ist aus der Gruppe bestehend aus C₁- bis C₂₀₋Alkylenanteilen, alicyclischen C₆- bis C₂₀-Anteilen und C₆- bis C₂₀-Arylenanteilen.

5. Copolymer nach Anspruch 4, bei dem jedes R₁, R₂ und/oder R₃ unabhängig ausgewählt ist aus der Gruppe bestehend aus C₂- bis C₈-Alkylen, C₆- bis C₁₂-Alicyclen und C₆- bis C₁₂-Arylen.

6. Copolymer nach Anspruch 4 oder 5, bei dem jedes R₁ unabhängig ausgewählt ist aus der Gruppe bestehend aus Adipinsäureresten, Terephthalsäureresten, Isophthalsäureresten und Naphthalinsäureresten.

7. Copolymer nach Anspruch 5, bei dem jedes R₂ unabhängig ausgewählt ist aus der Gruppe bestehend aus C₂- bis C₈-Alkylenanteilen.

8. Copolymer nach einem der vorhergehenden Ansprüche, bei dem Y ein Molekulargewicht von 200 bis 40 000 g/Mol, vorzugsweise 600 bis 20 000 g/Mol, insbesondere 5 000 bis 20 000 g/Mol hat.

9. Copolymer nach einem der vorhergehenden Ansprüche, bei dem Y aus einem oder mehreren steifen Kettensegmenten besteht, die mit einer Ester-, Polyester-, Carbonat-, Polycarbonat-, Epoxy-, Polyepoxy-, Imid- und/oder Polyimidgruppe verlängert sind.

10. Copolymer nach einem der vorhergehenden Ansprüche, bei dem m mindestens 2, vorzugsweise mindestens 3, insbesondere zwischen 3 und 6 ist.

11. Copolymer nach einem der vorhergehenden Ansprüche, bei dem das Copolymer ein T_{g}/Tₘ-Verhältnis (wobei T_{g} und Tₘ für eine Temperatur in K stehen) von mindestens 0,75, vorzugsweise mindestens 0,77 hat.

12. Copolymer nach einem der vorhergehenden Ansprüche, bei dem das Copolymer ein transparentes Material ist.

13. Copolymer nach eine der vorhergehenden Ansprüche, bei dem das Copolymer einen Tₘ-T_{c}-Wert von weniger als 35°C, vorzugsweise weniger als 30°C hat.

14. Gemisch, das ein Copolymer gemäß einem der vorhergehenden Ansprüche und ein oder mehrere andere Polymere umfasst, vorzugsweise ein oder mehrere andere Polymere ausgewählt aus der Gruppe bestehend aus Polyamiden, Polyestern und Kautschuken.

15. Verbundmaterial, das ein Copolymer gemäß einem der Ansprüche 1 bis 13 oder ein Gemisch gemäß Anspruch 14 und mindestens einen Typ von Verstärkungsfüllstoffen umfasst, vorzugsweise mindestens einen Typ von Verstärkungsfüllstoffen ausgewählt aus der Gruppe bestehend aus Glimmer (Mica), Kaolin, Calciumcarbonat, Glasfaser, Aramidfaser und Kohlefaser umfasst.

16. Verfahren zur Herstellung eines Copolymers gemäß einem der Ansprüche 1 bis 13, bei dem die Amidsegmente durch Schmelzpolymerisation aus Dicarbonsäureanteilen, Diaminanteilen und/oder Aminosäureanteilen hergestellt werden.

17. Verfahren zur Herstellung eines Copolymers gemäß einem der Ansprüche 1 bis 13, bei dem ein Ausgangsmaterial verwendet wird, das mindestens eine Verbindung ausgewählt aus der Gruppe bestehend aus Tetraamiddiestern, Diamindiamiden und Diaminen enthält.

18. Verfahren zur Herstellung eines Copolymers gemäß einem der Ansprüche 1 bis 13, bei dem das Ausgangsmaterial ein aminfunktionalisiertes Y-Segment enthält.

## Revendications

1. Copolymère, représenté par la formule 1
-(-Y-Amide- (R-Amide-)ₙ-)ₘ- (I)
dans lequel chaque Amide représente un groupe -N(H)C(O)- ou -C(O)N(H)-
dans lequel chaque R est indépendamment choisi dans le groupe constitué des groupements alkylènes, de groupements alicycliques et de groupements arylènes,
dans lequel n a une valeur moyenne en nombre d'au moins 3,
dans lequel m est au moins 1,
dans lequel au moins 30 % des segments Amide-(R-Amide-)ₙ sont de longueur uniforme,
dans lequel chaque Y représente un segment à chaîne rigide comprenant un groupement choisi dans le groupe constitué des polyéthers aromatiques, des polysulfures aromatiques, des polysulfones aromatiques, des copolyesteréthers aromatiques, des polycarbonates aromatiques, des polyphénylènes aromatiques, des polyxylylènes aromatiques, et des polysiloxanes aromatiques et de leurs copolymères,
dans lequel la température de transition vitreuse du copolymère est supérieure à 120°C,
dans lequel la valeur Tm-Tc est inférieure à 40°C,
dans lequel le rapport Tg/Tm (dans lequel Tg et Tm représentent une température en °K) est au moins 0,72.

2. Copolymère selon la revendication 1 dans lequel au moins 50 %, de préférence au moins 70 %, des segments Amide-(R-Amide-)ₙ sont de longueur uniforme.

3. Copolymère selon l'une quelconque des revendications précédentes, dans lequel les segments d'amide (Amide-(R-Amide-)ₙ) sont choisis dans le groupe constitué de
-C(O)N(H)-R₂-N(H)C(O)-R₁-C(O)N(H)-R₂-N(H)C(O)-,
-C(O)N(H)-R₃-C(O)N(H)-R₂-N(H)C(4)-R₃-(H)C(O)-,
-N(H)C(O)-R₁-C(O)N(H)-R₂-N(H)C(O)-R₁-C(O)N(H)-,
et
-N(H)C(O)-R₃-N(H)C(O)-R₁-C(O)N(H)-R₃-C(O)N(H)-,
dans lequel chaque R₁, R₂ et R₃ est indépendamment choisi dans le groupe constitué de fractions alkylènes et arylènes.

4. Copolymère selon la revendication 3, dans lequel chaque R₁, R₂ et/ou R₃ est indépendamment choisi dans le groupe constitué des groupements alkylènes en C₁-C₂₀, des groupements alicycliques en C₆-C₂₀ et des groupements arylènes en C₆-C₂₀.

5. Copolymère selon la revendication 4, dans lequel chaque R₁, R₂ et/ou R₃ est choisi dans le groupe constitué des groupements alkylènes en C₂-C₈, alicycliques en C₆-C₁₂ et arylènes en C₆-C₁₂

6. Copolymère selon la revendication 4 ou 5, dans lequel chaque R₁ est indépendamment choisi dans le groupe constitué des résidus d'acide adipique, des résidus d'acide téréphtalique, des résidus d'acide isophtalique et des résidus d'acide naphtalique.

7. Copolymère selon la revendication 5, dans lequel chaque R₂ est indépendamment choisi dans le groupe constitué des groupements alkylènes en C₂-C₈.

8. Copolymère selon l'une quelconque des revendications précédentes, dans lequel Y a un poids moléculaire allant de 200 à 40 000 g/mole, de préférence de 600 à 20 000 g/mole, de manière davantage préférée de 5 000 à 20 000 g/mole.

9. Copolymère selon l'une quelconque des revendications précédentes, dans lequel Y est constitué de un ou plusieurs segments à chaîne rigide qui sont prolongés par un groupe ester, polyester, carbonate, polycarbonate, époxy, polyépoxy, imide et/ou polyimide.

10. Copolymère selon l'une quelconque des revendications précédentes, dans lequel m est au moins 2, de préférence au moins 3, de manière davantage préférée compris entre 3 et 6.

11. Copolymère selon l'une quelconque des revendications précédentes, dans lequel le copolymère a un rapport Tg/Tm (dans lequel Tg et Tm représentent une température en °K) d'au moins 0,75, de préférence d'au moins 0,77.

12. Copolymère selon l'une quelconque des revendications précédentes, dans lequel le copolymère est un matériau transparent.

13. Copolymère selon l'une quelconque des revendications précédentes, dans lequel le copolymère a une valeur Tm-Tc inférieure à 35°C, de préférence inférieure à 30°C.

14. Mélange comprenant un copolymère selon l'une quelconque des revendications précédentes et un ou plusieurs autres polymères, de préférence un ou plusieurs autres polymères choisis dans le groupe constitué de polyamides, de polyesters et de caoutchoucs.

15. Composite comprenant un copolymère selon l'une quelconque des revendications 1 à 13 ou un mélange selon la revendication 14 et au moins un type de charges renforçantes, comprenant de préférence au moins un type de charges renforçantes choisies dans le groupe constitué de mica, de kaolin, de carbonate de calcium, de fibre de verre, de fibre d'aramide et de fibre de carbone.

16. Procédé de préparation d'un copolymère selon l'une quelconque des revendications 1 à 13, dans lequel les segments d'amide sont préparés à partir de groupements d'acide dicarboxylique, de groupements de diamine et/ou de groupements d'acide aminé par polymérisation à l'état fondu.

17. Procédé de préparation d'un copolymère selon l'une quelconque des revendications 1 à 13, dans lequel un produit de départ qui est utilisé contient au moins un composé choisi dans le groupe constitué de tétra-amide diesters, de diamine-diamides et de diamines.

18. Procédé de préparation d'un copolymère selon l'une quelconque des revendications 1 à 13, dans lequel le produit de départ contient un segment Y à fonctionnalité amine.
